# FASCICULE DE BREVET EUROPEEN

(11) **EP 3 668 769 B1**
(45) Date de publication et mention de la délivrance du brevet: **12.01.2022**
(21) Numéro de dépôt: 18752583.7
(22) Date de dépôt: 17.07.2018
(51) Int. Cl.: F16H 61/28, F16H 61/04, F16H 61/688, B60W 30/19, B60W 10/113, B60K 6/48, B60W 20/00

(54) **PROCÉDÉ D'APPRENTISSAGE D'UN ACTIONNEUR DE BOITE DE VITESSES À DOUBLE EMBRAYAGE D'UN VÉHICULE HYBRIDE**
VERFAHREN ZUM LERNEN DER POSITION EINES AKTUATORS EINES DOPPELKUPPLUNGSGETRIEBES EINES HYBRIDFAHRZEUGS
METHOD FOR LEARNING THE POSITION OF AN ACTUATOR OF A DUAL CLUTCH TRANSMISSION OF A HYBRID VEHICLE

(30) Priorité: 18.08.2017 FR 1757740
(43) Date de publication de la demande: 24.06.2020
(73) Titulaire: PSA Automobiles SA, 78300 Poissy (FR)
(72) Inventeur: SCHAEFFER, Eric, 75013 Paris (FR)
(86) Numéro de dépôt international: PCT/FR2018/051820
(87) Numéro de publication internationale: WO 2019/034816

(56) Documents cités:
- DE-A1-102007 038 775
- DE-A1-102012 024 213
- FR-A1- 2 979 405
- US-A1- 2017 120 897

## Description

La présente invention concerne un procédé d'apprentissage de positions d'actionneurs d'engagement des rapports de vitesse d'une boîte de vitesses à double embrayage pour un véhicule automobile hybride, ainsi qu'un véhicule automobile hybride comportant des moyens mettant en œuvre un tel procédé d'apprentissage.

Un type connu de boîte de vitesses automatisée à simple embrayage, présenté notamment par le document EP-B1-1767829, comporte des actionneurs pilotés par un calculateur électronique, agissant sur des fourchettes pour déplacer axialement les manchons de synchronisation afin de passer automatiquement les différents rapports de vitesse.

Ces boîtes de vitesses comportent des capteurs disposés sur les actionneurs, permettant d'effectuer lors de stratégies d'apprentissage une mémorisation de différentes positions particulières de chaque manchon de synchronisation. L'apprentissage des positions particulières permet de réaliser par la suite un pilotage des actionneurs en position, en effort et en vitesse, donnant les meilleures conditions de rapidité, de confort, et de protection des composants mécaniques pour limiter l'usure.

Un autre type connu de boîte de vitesses automatisée comprenant deux embrayages en entrée, présenté notamment par le document US-B2-9057434, met en œuvre un procédé d'apprentissage de positions particulières des manchons de synchronisation en mesurant des vitesses de décélération des arbres primaires lors des synchronisations. Un autre procédé d'apprentissage de positions particulières des manchons de synchronisation pour une boîte de vitesses à double embrayages est connu de FR2979405.

Par ailleurs un type de véhicule hybride connu comporte un moteur thermique entraînant par un embrayage primaire une machine électrique de traction, qui entraîne à son tour deux embrayages d'entrée d'une boîte de vitesses à double embrayage.

Cette disposition permet de réaliser un roulage en mode hybride en fermant l'embrayage primaire, avec une traction par le moteur thermique et la machine électrique qui entraînent les roues motrices par un des rapports de la boîte de vitesses.

On réalise aussi un roulage en mode électrique avec le moteur thermique à l'arrêt et l'embrayage primaire ouvert, en utilisant la machine électrique qui délivre un couple moteur sur les roues motrices en prélevant une énergie sur une batterie de traction, ou un couple de freinage avec un travail en génératrice qui freine le véhicule et recharge cette batterie.

De plus on peut réaliser un roulage en mode roue-libre, appelé aussi mode navigation, ou « sailing » en langue anglaise, en laissant les deux embrayages d'entrée de la boîte de vitesses ouverts, ou en disposant cette boîte de vitesses au point mort de manière à ne pas entraîner la machine électrique. Le véhicule roule alors sur son élan quand le conducteur relâche la pédale d'accélérateur.

Le mode roue-libre utilisant l'inertie du véhicule, procure une réduction de consommation de carburant et des émissions de gaz polluants.

On peut réaliser en particulier un apprentissage des positions particulières des manchons de synchronisation dans le mode roue-libre, de manière à effectuer des mesures avec les couples résiduels réels appliqués sur les arbres de la boîte de vitesses pendant ce mode de roulage. En effet suivant le couple appliqué sur les arbres de boîte de vitesses, on obtient des flexions et des déplacements axiaux de ces arbres qui modifient légèrement les positions caractéristiques.

On réalise notamment cet apprentissage durant un premier roulage du véhicule sortant de l'assemblage, afin de corriger les positions apprises avec un mode d'apprentissage en usine qui donne une première approximation de ces positions.

Toutefois cet apprentissage lors du roulage en mode roue-libre, nécessitant l'engagement de tous les rapports avec les embrayages d'entrée de la boîte de vitesses ouverts, avec des relances importantes de la vitesse des arbres primaires disposés en sortie de ces embrayages, donnant des à-coups dans la transmission qui posent des problèmes d'inconforts.

De plus des vitesses aléatoires des arbres primaires pendant la phase d'apprentissage, peuvent ajouter une imprécision dans la détermination des positions particulières.

La présente invention a notamment pour but d'éviter ces inconvénients de la technique antérieure.

Elle propose à cet effet un procédé d'apprentissage de positions particulières d'actionneurs d'engagement des rapports de vitesse d'une boîte de vitesses à double embrayage, pour un véhicule automobile hybride comportant un moteur thermique entraînant successivement un embrayage primaire, une machine électrique, puis deux embrayages d'entrée de la boîte de vitesses entraînant chacun un arbre primaire, ce procédé étant remarquable en ce que lors d'un roulage en mode roue-libre comprenant l'ouverture de l'embrayage primaire, pour l'apprentissage de l'engagement d'un rapport final lié à un arbre primaire final, en venant d'un rapport initial engagé lié à l'autre arbre primaire initial, il ouvre les embrayages d'entrée qui sont fermés, il pilote la vitesse de la machine électrique pour l'ajuster sur celle de l'arbre primaire initial, puis il ferme l'embrayage du rapport initial, et il effectue ensuite un engagement du rapport final en réalisant l'apprentissage des positions particulières de l'actionneur de ce rapport final.

Un avantage de ce procédé d'apprentissage est qu'à partir d'un mode de roulage en roue-libre comprenant la boîte de vitesses au point mort, la machine électrique effectue une synchronisation de l'arbre primaire initial grâce au pilotage en vitesse de la machine électrique puis à la fermeture de son embrayage, sans utiliser le synchroniseur de ce rapport initial ce qui évite un à-coup dans la transmission qui pourrait être inconfortable.

On réalise ensuite l'apprentissage de l'engagement du rapport final, avec l'arbre primaire initial présentant une vitesse de rotation correspondant au rapport initial engagé, ce qui donne des conditions représentatives de cet engagement procurant la meilleure précision de mesure.

Le procédé d'apprentissage suivant l'invention peut de plus comporter une ou plusieurs des caractéristiques suivantes, qui peuvent être combinées entre elles.

Avantageusement, après l'engagement du rapport final le procédé pilote la vitesse de la machine électrique pour l'ajuster sur celle de l'arbre primaire final, puis il ferme l'embrayage du rapport final.

Avantageusement, après la fermeture de l'embrayage du rapport initial ou du rapport final, le procédé pilote la vitesse de la machine électrique avec un pilotage en vitesse sans transmettre de couple.

Avantageusement, le procédé effectue un apprentissage des positions particulières d'engagement des rapports de vitesse lors des premiers roulages du véhicule après son assemblage.

En particulier, le procédé peut effectuer un apprentissage de positions particulières comprenant le début de l'appui sur un cône de synchronisation, la fin de la synchronisation, et le rapport final complètement engagé.

L'invention a de plus pour objet un véhicule automobile équipé d'une boîte de vitesses à double embrayage, remarquable en ce qu'il comporte des moyens mettant en œuvre un procédé d'apprentissage comprenant l'une quelconque des caractéristiques précédentes.

L'invention sera mieux comprise, et d'autres buts, caractéristiques, détails et avantages de celle-ci apparaîtront plus clairement dans la description explicative qui va suivre, faite en référence aux dessins annexés donnés uniquement à titre d'exemple illustrant un mode de réalisation de l'invention, et dans lesquels :
- la figure 1 est un schéma d'une boîte de vitesses à double embrayage mettant en œuvre un procédé d'apprentissage selon l'invention ;
- la figure 2 est un schéma en demi-coupe axiale d'un synchroniseur double de cette boîte de vitesses ;
- la figure 3 est un graphique présentant en fonction du temps des positions particulières de l'actionneur d'engagement de ce synchroniseur ; et
- la figure 4 est un graphique présentant en fonction du temps successivement en partant du haut, la position des embrayages et des vitesses de rotation.

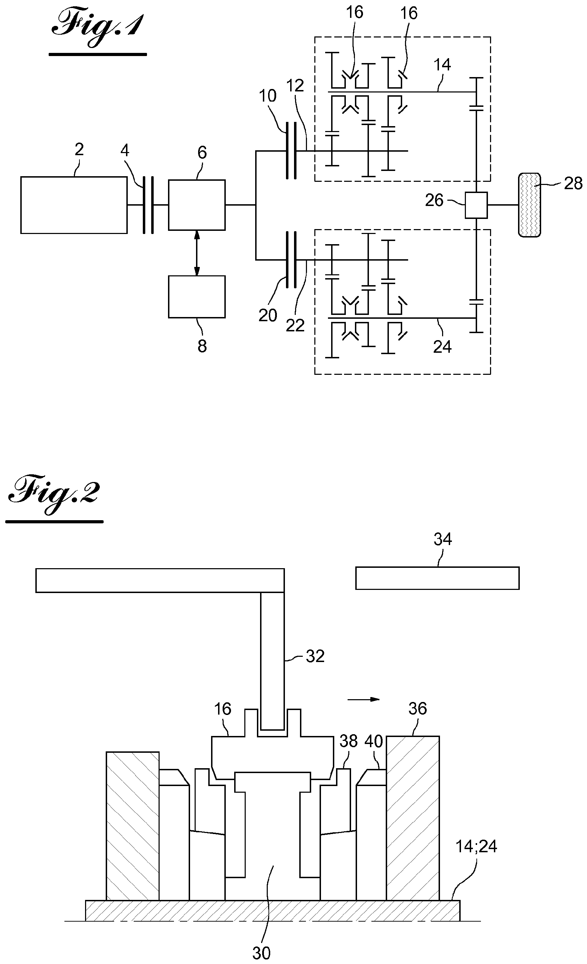

La figure 1 présente un moteur thermique 2 entraînant par un embrayage primaire 4 une machine électrique 6 de traction qui est alimentée par une batterie de traction 8.

La machine électrique 6 entraîne par un premier embrayage 10 un premier arbre primaire 12 portant des pignons fixes en prise avec des pignons libres d'un premier arbre secondaire 14, pour réaliser les rapports de vitesse impairs. La machine électrique 6 entraîne en parallèle par un deuxième embrayage 20 un deuxième arbre primaire 22 portant des pignons fixes en prise avec des pignons libres d'un deuxième arbre secondaire 24, pour réaliser les rapports de vitesse pairs.

Les deux arbres secondaires 14, 24 entraînent chacun par des pignons un différentiel 26 qui répartit le mouvement vers les deux roues motrices du véhicule 28.

Des manchons de synchronisation 16 se déplacent axialement d'un seul côté ou des deux côtés, pour réaliser respectivement l'engagement d'un pignon libre ou de deux pignons libres.

Un calculateur électronique non représenté, recevant notamment des informations sur le fonctionnement du moteur thermique 2, l'état des embrayages 4, 10, 20, et la vitesse des arbres primaires 12, 22, commande des actionneurs déplaçant les manchons de synchronisation 16.

La figure 2 présente un manchon de synchronisation double 16 commandant de chaque côté l'engagement d'un pignon libre 36, qui est entraîné par un moyeu 30 solidaire de l'arbre secondaire 14, 24.

Une fourchette 32 reliée à un actionneur est engagée sur une rainure circulaire extérieure du manchon de synchronisation 16, afin d'effectuer une commande en effort et en déplacement de ce manchon. L'effort délivré par l'actionneur est mesuré directement par le courant consommé par cet actionneur, son déplacement est mesuré par un capteur de déplacement 34 de la fourchette 32.

Le manchon de synchronisation 16 presse axialement sur un cône de synchronisation 38 qui synchronise la vitesse du pignon libre 36. Une fois la vitesse de synchronisation atteinte, le cône de synchronisation 38 laisse passer le manchon 16 vers des dentures 40 liées au pignon libre 36 pour le solidariser avec l'arbre secondaire 14, 24.

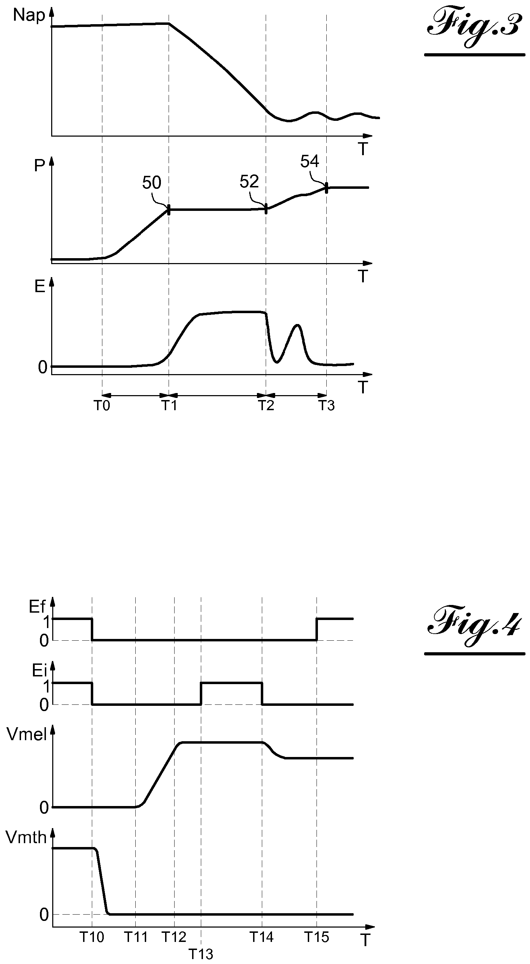

La figure 3 présente en fonction du temps T pour l'engagement d'un rapport final à partir d'un rapport initial de rang plus faible, ces rapports étant disposés sur un même arbre primaire, successivement à partir du haut, la vitesse Nap de cet arbre primaire, la position P du manchon de synchronisation 16, et l'effort E développé sur ce manchon par son actionneur.

Avant l'instant T0 le rapport initial est engagé, la vitesse Nap de l'arbre primaire est importante, la position P du manchon 16 et stable et l'effort E appliqué dessus est nul. L'embrayage de cet arbre primaire est ouvert.

Entre l'instant T0 et l'instant T1 l'actionneur est piloté pour amener le cône de synchronisation 38 en appui sur un cône mâle lié au pignon libre 36. Cet appui se traduit par un début de la montée de l'effort E, ce qui donne une première position particulière 50 de l'actionneur. La synchronisation débute, la vitesse Nap de l'arbre primaire commence à diminuer.

Entre l'instant T1 et l'instant T2 l'actionneur est piloté en effort pour maintenir une pression sensiblement constante sur le cône de synchronisation 38, la vitesse Nap de l'arbre primaire diminue régulièrement. A l'instant T2 la synchronisation se termine, l'effort E chute ce qui permet d'enregistrer une deuxième position particulière 52 de l'actionneur.

Après l'instant T2 l'actionneur avance rapidement avec un effort E faible, qui peut varier légèrement au moment de l'engagement des dentures 40. A l'instant T3 le rapport final est complètement engagé, la position P de l'actionneur ne bouge plus ce qui donne une troisième position particulière 54.

La figure 4 présente successivement en partant du bas, la vitesse du moteur thermique Vmth, la vitesse de la machine électrique Vmel, et l'état de l'embrayage du rapport initial Ei ainsi que de l'embrayage du rapport final Ef, qui sont à 0 pour un état ouvert et 1 pour un état fermé. Le véhicule passe d'un rapport initial engagé, lié à un arbre primaire initial, a un rapport final lié à l'autre arbre primaire final, qui est le rapport immédiatement supérieur. La vitesse du véhicule reste constante pendant toute la manœuvre.

A l'instant T10 le mode roue-libre est enclenché. L'embrayage primaire 4 est ouvert, le moteur thermique 2 est arrêté, et sa vitesse Vmth descend vers une vitesse nulle. Les deux embrayages d'entrée 10, 20 sont commandés pour s'ouvrir.

A l'instant T11 la machine électrique 6 est pilotée en vitesse pour augmenter sa vitesse de rotation Vmel, de manière à synchroniser sa vitesse sur celle de l'arbre primaire initial lorsque le rapport initial est engagé. A l'instant T12 cette vitesse est atteinte.

A l'instant T13 l'embrayage du rapport initial Ei est fermé, ce qui se fait sans à-coups dans la transmission grâce à la synchronisation préalable de la vitesse de la machine électrique 6.

Ensuite de l'instant T13 à l'instant T14 le rapport final est engagé, avec un procédé d'apprentissage des positions particulières de son actionneur, apprises pour un véhicule en mode roue-libre.

A l'instant T14 le rapport final est entièrement engagé. L'embrayage du rapport initial Ei est alors ouvert.

Ensuite de l'instant T14 à l'instant T15 la machine électrique 6 est pilotée en vitesse pour diminuer sa vitesse de rotation Vmel, de manière à synchroniser sa vitesse sur celle de l'arbre primaire final lorsque ce rapport final est engagé. Le rapport final étant un rapport plus élevé que le rapport initial, la vitesse de rotation de l'arbre primaire final est inférieure.

A l'instant T15 la machine électrique 6 a synchronisé sa vitesse de rotation Vmel avec celle de l'arbre primaire final. L'embrayage final Ef est fermé, ce qui se fait aussi sans à-coups dans la transmission grâce à la synchronisation préalable de la vitesse de la machine électrique 6.

Avec le procédé selon l'invention on réalise en utilisant la machine électrique 6 des ajustements des vitesses des arbres primaires 12, 22 préalables aux engagements des rapports, ce qui permet d'éviter de solliciter les synchroniseurs qui pourraient générer un couple transmis aux roues motrices 28. De cette manière la vitesse du véhicule est maintenue constante, et on ne perturbe pas le roulage en mode roue-libre.

## Revendications

1. Procédé d'apprentissage de positions particulières d'actionneurs d'engagement des rapports de vitesse d'une boîte de vitesses à double embrayage, pour un véhicule automobile hybride comportant un moteur thermique (2) entraînant successivement un embrayage primaire (4), une machine électrique (6), puis deux embrayages d'entrée (10, 20) de la boîte de vitesses entraînant chacun un arbre primaire (12, 22),
**caractérisé en ce que** lors d'un roulage en mode roue-libre comprenant l'ouverture de l'embrayage primaire (4), pour l'apprentissage de l'engagement d'un rapport final lié à un arbre primaire final (12; 22),
en venant d'un rapport initial engagé lié à l'autre arbre primaire initial (12; 22),
il ouvre les embrayages d'entrée (10, 20) qui sont fermés, il pilote la vitesse de la machine électrique (6) pour l'ajuster sur celle de l'arbre primaire initial (12; 22),
puis il ferme l'embrayage du rapport initial (Ei), et il effectue ensuite un engagement du rapport final en réalisant l'apprentissage des positions particulières de l'actionneur de ce rapport final.

2. Procédé d'apprentissage selon la revendication 1, **caractérisé en ce qu'**après l'engagement du rapport final, il pilote la vitesse de la machine électrique (6) pour l'ajuster sur celle de l'arbre primaire final (12; 22), puis il ferme l'embrayage final du rapport final (Ef).

3. Procédé d'apprentissage selon la revendication 1 ou 2, **caractérisé en ce qu'**après la fermeture de l'embrayage du rapport initial (Ei) ou du rapport final (Ef), il pilote la vitesse de la machine électrique (6) avec un pilotage en vitesse sans transmettre de couple.

4. Procédé d'apprentissage selon l'une quelconque des revendications précédentes, **caractérisé en ce qu'**il effectue un apprentissage des positions particulières d'engagement des rapports de vitesse lors des premiers roulages du véhicule après son assemblage.

5. Procédé d'apprentissage selon l'une quelconque des revendications précédentes, **caractérisé en ce qu'**il effectue un apprentissage de positions particulières comprenant le début de l'appui sur un cône de synchronisation (50), la fin de la synchronisation (52), et le rapport final complètement engagé (54).

6. Véhicule automobile équipé d'une boîte de vitesses à double embrayage, **caractérisé en ce qu'**il comporte des moyens mettant en œuvre un procédé d'apprentissage suivant l'une quelconque des revendications précédentes.

## Patentansprüche

1. Verfahren zum Erlernen bestimmter Stellungen von Aktuatoren zum Einlegen der Übersetzungsverhältnisse eines Doppelkupplungsgetriebes für ein Hybrid-Kraftfahrzeug mit einer Wärmekraftmaschine (2), die nacheinander eine Primärkupplung (4) antreibt, eine elektrische Maschine (6), dann zwei Eingänge Kupplungen (10, 20) des Getriebes, die jeweils eine Primärwelle (12, 22) antreiben, **dadurch gekennzeichnet, dass** beim Fahren im Freilaufmodus das Öffnen der Primärkupplung (4) zum Lernen des Einlegens eines mit einem letzte Primärwelle (12 ; 22), ausgehend von einem eingelegten Anfangsgang, der mit der anderen Anfangs-Primärwelle (12 ; 22), öffnet die Eingangskupplungen (10, 20), die geschlossen sind, regelt die Drehzahl der Elektromaschine (6), um sie an die der ersten Primärwelle (12 ; 22) anzupassen , dann schließt sie die Kupplung von den Anfangsbericht (Ei) und aktiviert dann den Endbericht, indem er die speziellen Positionen des Stellglieds dieses Endberichts lernt.

2. Lernverfahren nach Anspruch 1, **dadurch gekennzeichnet, dass** es nach dem Einlegen des letzten Ganges die Drehzahl der Elektromaschine (6) an die der letzten Primärwelle (12 ; 22) anpasst und dann die letzte Kupplung schließt des Abschlussberichts (Ef).

3. Lernverfahren nach Anspruch 1 oder 2, **dadurch gekennzeichnet, dass** es nach Schließen der Kupplung der Anfangsmeldung (Ei) oder der Schlussmeldung (Ef) die Drehzahl der elektrischen Maschine (6) mit einer Drehzahlregelung ohne Drehmomentübertragung regelt.

4. Lernverfahren nach einem der vorhergehenden Ansprüche, **dadurch gekennzeichnet, dass** es das Lernen der besonderen Eingriffspositionen der Übersetzungsverhältnisse während der ersten Fahrten des Fahrzeugs nach seiner Montage durchführt.

5. Lernverfahren nach einem der vorhergehenden Ansprüche, **dadurch gekennzeichnet, dass** es ein Lernen bestimmter Positionen durchführt, umfassend den Beginn des Drückens auf einen Synchronisationskegel (50), das Ende der Synchronisation (52) und den vollständig eingelegten letzten Gang (54).

6. Kraftfahrzeug mit Doppelkupplungsgetriebe, **dadurch gekennzeichnet, dass** es Mittel umfasst, die ein Lernverfahren nach einem der vorhergehenden Ansprüche implementieren.

## Claims

1. Learning method particular positions of actuators for engaging the gear ratios of a double-clutch gearbox, for a hybrid motor vehicle comprising a heat engine (2) successively driving a primary clutch (4), a machine electric (6), then two input clutches (10, 20) of the gearbox each driving a primary shaft (12, 22), **characterized in that** when running in freewheel mode comprising the opening of the primary clutch (4), for learning the engagement of a final gear linked to a final primary shaft (12 ; 22), coming from an engaged initial gear linked to the other initial primary shaft (12 ; 22), it opens the input clutches (10, 20) which are closed, it controls the speed of the electric machine (6) to adjust it to that of the initial primary shaft (12 ; 22), then it closes the clutch of the initial report (Ei), and it then engages the final report by learning the particular positions of the actuator of this final report.

2. Learning method according to claim 1, **characterized in that** after engagement of the final gear, it controls the speed of the electric machine (6) to adjust it to that of the final primary shaft (12 ; 22), then it closes the final clutch of the final report (Ef).

3. Learning method according to claim 1 or 2, **characterized in that** after closing the clutch of the initial report (Ei) or of the final report (Ef), it controls the speed of the electric machine (6) with a speed control without transmitting torque.

4. Learning method according to any one of the preceding claims, **characterized in that** it performs learning of the particular engagement positions of the gear ratios during the first runs of the vehicle after its assembly.

5. Learning method according to any one of the preceding claims, **characterized in that** it performs a learning of particular positions comprising the start of pressing on a synchronization cone (50), the end of the synchronization (52), and the final gear fully engaged (54).

6. Motor vehicle equipped with a double-clutch gearbox, **characterized in that** it comprises means implementing a learning method according to any one of the preceding claims.
